# EUROPÄISCHE PATENTSCHRIFT

(11) **EP 0 540 554 B1**
(45) Veröffentlichungstag und Bekanntmachung des Hinweises auf die Patenterteilung: **31.08.1994**
(21) Anmeldenummer: 91912741.5
(22) Anmeldetag: 10.07.1991
(51) Int. Cl.: C09B 62/51, D06P 1/384

(54) **MONOAZOVERBINDUNGEN, VERFAHREN ZU DEREN HERSTELLUNG UND IHRE VERWENDUNG ALS FARBSTOFFE**
MONOAZO COMPOUNDS, METHOD OF PREPARING THEM, AND THEIR USE AS DYES
COMPOSES MONOAZO QUES, LEUR PROCEDE DE FABRICATION ET LEUR UTILISATION COMME COLORANTS

(30) Priorität: 24.07.1990 DE 4023475
(43) Veröffentlichungstag der Anmeldung: 12.05.1993
(73) Patentinhaber: HOECHST AKTIENGESELLSCHAFT, 65926 Frankfurt am Main (DE)
(72) Erfinder: SPRINGER, Hartmut, D-6240 Königstein (DE); GLEISSNER, Rolf, D-6000 Frankfurt (DE)
(86) Internationale Anmeldenummer: EP9101285
(87) Internationale Veröffentlichungsnummer: WO9201755

(56) Entgegenhaltungen:
- EP-A- 0 040 806
- FR-A- 2 066 070

## Beschreibung

Die Erfindung liegt auf dem technischen Gebiet der faserreaktiven Farbstoffe.

Faserreaktive Azofarbstoffe mit Carbonsäureamid-Gruppen als Substituenten an einem aromatischen Rest sind bspw. aus den US-Patentschriften Nrs. 4 448 583, 4 707 545 und 4 769 446 und aus der europäischen Patentanmeldungs-Veröffentlichung Nr. 0 210 492A bekannt. Unter den alkalischen Färbebedingungen kann jedoch die Amidbindung gespalten werden, was zu einer merklichen Farbtonverschiebung führt. Hingegen zeigen diesen Effekt Farbstoffe mit der an einen aromatischen Rest gebundenen Aminogruppe, die jedoch einen Chlor-s-triazinyl-Rest an diese Aminogruppe gebunden enthält, wie sie bspw. aus der US-PS 4 725 675 und der europäischen Patentanmeldungs-Veröffentlichung Nr. 0 066 819A bekannt sind, nicht. Diese Farbstoffe haben allerdings den Nachteil, daß sie nicht ätzbar sind und daher nur begrenzt zur Fond-Färbung eingesetzt werden können.

Mit der vorliegenden Erfindung wurden diesbezüglich verbesserte wasserlösliche Monoazoverbindungen der nachstehend angegebenen und definierten allgemeinen Formel (1), welche sehr gute faserreaktive, färberische Eigenschaften besitzen, gefunden. 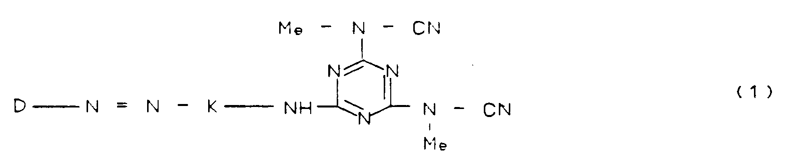
In Formel (1) bedeuten:
- Me: ist Wasserstoff oder ein Alkalimetall, wie Natrium, Kalium oder Lithium;
- K: ist ein Rest der allgemeinen Formel (2)

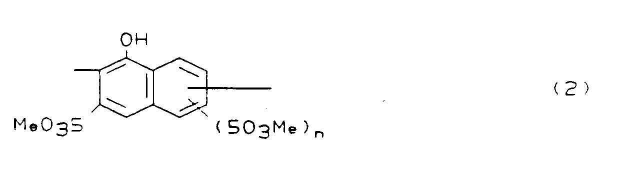

in welcher
- Me: eine der oben angegebenen Bedeutungen hat und
- n: die Zahl Null oder 1, bevorzugt 1, bedeutet (wobei im Falle von n gleich Null diese Gruppe Wasserstoff bedeutet);
- D: ist eine Gruppe der allgemeinen Formel (3a), (3b) oder (3c) 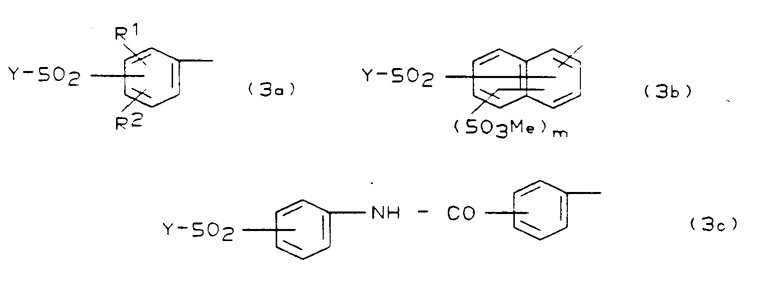
in welchen
- Me: eine der oben genannten Bedeutungen besitzt,
- R¹: Wasserstoff, Alkyl von 1 bis 4 C-Atomen, wie Ethyl und insbesondere Methyl, das durch Sulfo, Carboxy oder Sulfato substituiert sein kann, Alkoxy von 1 bis 4 C-Atomen, wie Ethoxy und insbesondere Methoxy, das durch Sulfo, Carboxy oder Sulfato substituiert sein kann, Chlor, Brom, Hydroxy, Cyano, Carboxy oder Sulfo ist, vorzugsweise Wasserstoff, Methyl, Methoxy oder Ethoxy ist,
- R²: Wasserstoff, Alkyl von 1 bis 4 C-Atomen, wie Ethyl und insbesondere Methyl, oder Alkoxy von 1 bis 4 C-Atomen, wie Ethoxy und insbesonder Methoxy, ist, bevorzugt Wasserstoff oder Methoxy ist,
- Y: Vinyl oder Ethyl ist, das in β-Stellung einen Substituenten enthält, der durch Alkali unter Bildung der Vinylgruppe eliminierbar ist, und
- m: die Zahl Null, 1 oder 2 ist (wobei im Falle von m gleich Null diese Gruppe Wasserstoff bedeutet).

In Formel (3a) steht die Gruppe Y-SO₂- bevorzugt in meta- oder para-Stellung zur freien, mit der Azogruppe verbundenen Bindung an den Benzolring gebunden, und in Formel (3c) steht diese Gruppe bevorzugt in meta- oder para-Stellung zur Aminocarbonylgruppe an den Benzolring gebunden. In Formel (3b) steht die freie Bindung, die zur Azogruppe führt, bevorzugt in 2-Stellung an dem Naphthalinrest.

Die einzelnen Formelglieder können zueinander im Rahmen ihrer Bedeutung gleiche oder verschiedene Bedeutungen besitzen.

Substituenten, die in β-Stellung der Ethylgruppe des Formelgliedes Y stehen und die alkalisch eliminierbar sind, sind beispielsweise Alkanoyloxygruppen von 2 bis 5 C-Atomen, wie die Acetyloxygruppen, Aroyloxygruppen, wie die Benzoyloxy-, Sulfobenzoyloxy- oder Carboxybenzoyloxy-Gruppe, Alkyl- und Dialkylaminogruppen mit Alkylresten von 1 bis 4 C-Atomen, wie insbesondere die Dimethylamino- und die Diethylaminogruppe, Trialkylammoniumgruppen mit Alkylresten von 1 bis 4 C-Atomen, wie die Trimethylammoniumgruppe, wobei deren Anion ein übliches, farbloses Anion ist, wie das Chlorid-, Hydrogensulfat- oder Sulfatanion, Alkylsulfonyloxygruppen von 1 bis 4 C-Atomen, wie die Methylsulfonyloxy-Gruppe, das Fluor- oder Bromatom und insbesondere eine Phosphato-, Thiosulfato- und Sulfatogruppe. Bevorzugt ist die Gruppe Y-SO₂- die Vinylsulfonylgruppe oder die β-Chlorethylsulfonyl-, β-Thiosulfatoethylsulfonyl- oder die β-Sulfatoethylsulfonyl-Gruppe, insbesondere bevorzugt die β-Sulfatoethylsulfonyl-Gruppe.

Sulfo-, Carboxy-, Sulfato-, Thiosulfato- und Phosphatogruppen sind Gruppen der allgemeinen Formel -SO₃Me , -COOMe , -OSO₃Me , -S-SO₃Me bzw. -OPO₃Me₂ , in welchen Me eine der oben genannten Bedeutungen besitzt.

Der Rest D ist beispielsweise:
2-(β-Sulfatoethylsulfonyl)-phenyl,
3-(β-Sulfatoethylsulfonyl)-phenyl,
4-(β-Sulfatoethylsulfonyl)-phenyl,
2-Carboxy-5-(β-sulfatoethylsulfonyl)-phenyl,
2-Chlor-3-(β-sulfatoethylsulfonyl)-phenyl,
2-Chlor-4-(β-sulfatoethylsulfonyl)-phenyl,
2-Ethoxy-4-(β-sulfaotethylsulfonyl)-phenyl,
2-Ethoxy-5-(β-sulfatoethylsulfonyl)-phenyl,
2-Ethyl-4-(β-sulfatoethylsulfonyl)-phenyl,
2-Methoxy-5-(β-sulfatoethylsulfonyl)-phenyl,
2,4-Diethoxy-5-(β-sulfatoethylsulfonyl)-phenyl,
2,4-Dimethoxy-5-(β-sulfatoethylsulfonyl)-phenyl,
2,5-Dimethoxy-4-(β-sulfatoethylsulfonyl)-phenyl,
2-Methoxy-5-methyl-4-(β-sulfatoethylsulfonyl)-phenyl,
2-(β-Thiosulfatoethylsulfonyl)-phenyl,
3-(β-Thiosulfatoethylsulfonyl)-phenyl,
4-(β-Thiosulfatoethylsulfonyl)-phenyl,
2-Methoxy-5-(β-thiosulfatoethylsulfonyl)-phenyl,
2-Sulfo-4-(β-phosphatoethylsulfonyl)-phenyl,
2-Sulfo-4-(vinylsulfonyl)-phenyl,
2-Chlor-4-(β-chlorethylsulfonyl)-phenyl,
2-Chlor-5-(β-chlorethylsulfonyl)-phenyl,
3-(β-Acetyloxy-ethylsulfonyl)-phenyl,
4-(β-Acetyloxy-ethylsulfonyl)-phenyl,
2-Hydroxy-5-(β-sulfatoethylsulfonyl)-phenyl,
2-Methoxy-5-[β-(N-methyl-tauryl)-ethylsulfonyl]-phenyl,
5-(β-Sulfatoethylsulfonyl)-naphth-2-yl,
6-(β-Sulfatoethylsulfonyl)-naphth-2-yl,
7-(β-Sulfatoethylsulfonyl)-naphth-2-yl,
8-(β-Sulfatoethylsulfonyl)-naphth-2-yl,
6-(β-Sulfatoethylsulfonyl)-1-sulfo-naphth-2-yl,
5-(β-Sulfatoethylsulfonyl)-1-sulfo-naphth-2-yl,
8-(β-Sulfatoethylsulfonyl)-6-sulfo-naphth-2-yl,
2-Brom-3-(β-sulfatoethylsulfonyl)-phenyl und
2-Brom-4-(β-sulfatoethylsulfonyl)-phenyl, hiervon bevorzugt
4-(β-Sulfatoethylsulfonyl)-phenyl und
6-(β-Sulfatoethylsulfonyl)-1-sulfo-naphth-2-yl.

Bevorzugt ist der Rest -K-NH- ein Rest der allgemeinen Formel (4a), (4b) oder (4c) 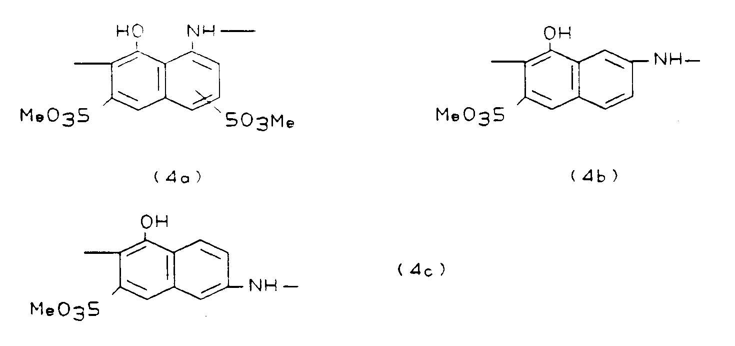
mit Me der oben genannten Bedeutung, wobei in Formel (4a) die eine Gruppe -SO₃Me in meta- oder para-Stellung zur Aminogruppe an den Naphthalinrest gebunden ist. Insbesondere bevorzugt ist der Rest -NH-K- ein Rest der allgemeinen Formel (4a), wobei die eine Gruppe -SO₃Me wiederum bevorzugt in meta-Stellung zur Aminogruppe an den Naphthalinrest gebunden ist.

Die vorliegende Erfindung betrifft weiterhin ein Verfahren zur Herstellung der Monoazoverbindungen der allgemeinen Formel (1), das dadurch gekennzeichnet ist, daß man eine Verbindung der allgemeinen Formel (5) 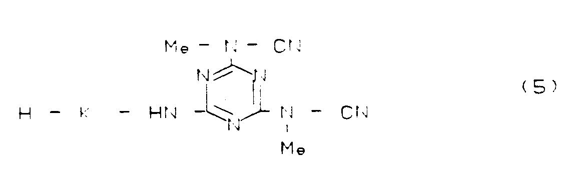
in welcher K und Me eine der oben genannten Bedeutungen haben, mit einer Diazoniumverbindung eines aromatischen Amins der allgemeinen Formeln D-NH₂ mit D der oben genannten Bedeutung in äquivalenter Menge kuppelt.

Die Diazotierung des Amins D-NH₂ erfolgt in üblicher Weise, so beispielsweise in wäßrigem Medium mittels salpetriger Säure (beispielsweise mittels Natriumnitrit in wäßrig-mineralsaurer, wie salz- oder schwefelsaurer Lösung) bei einer Temperatur zwischen -5°C und +15°C und bei einem pH-Wert von unterhalb 2. Erfindungsgemäß wird die Kupplungsreaktion in wäßrigem Medium bei einer Temperatur zwischen 5 und 40°C, bevorzugt zwichen 10 und 25°C, und bei einem pH-Wert zwischen 3,5 und 7,5, bevorzugt zwischen 4 und 6, durchgeführt.

Die Synthese der Ausgangsverbindungen der allgemeinen Formel (5) erfolgt zunächst durch Umsetzung eines Trihalogen-s-triazins, wie Cyanurfluorid und insbesondere Cyanurchlorid, mit zwei Äquivalenten Cyanamid oder eines Alkalimetallsalzes des Cyanamids bei einem pH-Wert zwischen 5 und 10, bevorzugt zwischen 7 und 9, und bei einer Temperatur von anfangs zwischen -10°C und +20°C, bevorzugt zwischen -5°C und +5°C, mit allmählicher Steigerung auf 80°C, bevorzugt 60°C, so auf einen Temperaturbereich zwischen 40°C und 80°C, bevorzugt zwischen 40 und 60°C. Die dritte Kondensationsreaktion mit der Komponente H-K-NH₂ erfolgt bei einem pH-Wert zwischen 2 und 7, bevorzugt zwischen 3 und 5, und bei einer Temperatur zwischen 40 und 95°C, bevorzugt zwischen 70 und 90°C.

Die Ausgangsverbindungen der allgemeinen Formel (5) können auch in der Weise hergestellt werden, daß man zunächst 1 Äquivalent Cyanamid oder eines Alkalimetallsalzes hiervon mit einem Trihalogen-s-triazin, wie Cyanurfluorid und insbesondere Cyanurchlorid, bei einer Temperatur zwischen -10°C und +25°C, bevorzugt zwischen -5°C und +5°C, und bei einem pH-Wert zwischen 5 und 10, bevorzugt zwischen 7 und 9, umsetzt und die sich daran anschließende zweite Kondensationsreaktion mit 1 Äquivalent einer Verbindung der Formel H-K-NH₂ mit K der oben genannten Bedeutung bei einem pH-Wert zwischen 2 und 8, bevorzugt zwischen 2 und 5, und bei einer Temperatur zwischen 0 und 40°C, bevorzugt zwischen 10 und 20°C, durchführt. Die sich anschließende dritte Kondensationsreaktion des sekundären Kondensationsproduktes mit einem weiteren Äquivalent Cyanamid oder einem Alkalimetallsalz des Cyanamids erfolgt bei einem pH-Wert zwischen 3 und 9 und bei einer Temperatur zwischen 50 und 100°C.

Die erfindungsgemäßen Azoverbindungen der allgemeinen Formel (1) können bezüglich ihrer faserreaktiven Reste Y-SO₂- analog bekannten Verfahrensweisen in Verbindungen mit ansonsten gleicher Konstitution, jedoch mit einer Gruppierung, in welcher Y eine andere Gruppe darstellt, übergeführt werden, so beispielsweise ausgehend von den Verbindungen mit einer β-Sulfatoethylsulfonyl- oder β-Chlorethylsulfonyl-Gruppe in solche, in welchen Y die Vinylgruppe bedeutet, und ausgehend von Verbindungen mit der β-Chlorethylsulfonyl- oder der Vinylsulfonyl-Gruppe in solche, in welchen Y die β-Thiosulfatoethyl-Gruppe bedeutet. So lassen sich beispielsweise die Vinylsulfonyl-Verbindungen aus ihren entsprechenden β-Chlorethylsulfonyl-Verbindungen oder ihren Verbindungen, in welchen Y die Ethylgruppe ist, die in β-Stellung die Estergruppe einer organischen oder anorganischen Säure als Substituenten enthält, wie beispielsweise die Sulfato- oder die Acetyloxygruppe, in der Weise herstellen, daß man ein Alkali in wäßrigem Medium bei einem pH-Wert zwischen 10 und 12 und bei einer Temperatur zwischen 20 und 50°C und, abhängig von der Temperatur, während 10 Minuten bis 3 Stunden auf diese Verbindungen einwirken läßt, so bspw. bei einer Temperatur von 50°C während 10 bis 20 Minuten oder bei einer Temperatur von 25°C während zwei bis drei Stunden; aus der β-Chlorethylsulfonyl-Verbindung oder der Vinylsulfonyl-Verbindung läßt sich bei einem pH-Wert zwischen 4 und 9 und einer Temperatur zwischen 20 und 60°C durch Umsetzung mit Natriumthiosulfat die entsprechende β-Thiosulfatoethylsulfonyl-Verbindung herstellen.

Die Abscheidung und Isolierung der erfindungsgemäß hergestellten Azoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Azoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Hierbei kann man analog bekannten Verfahrensweisen vorgehen.

Hydroxygruppenhaltige Materialien-sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A. Wegen ihrer guten Wasserlöslichkeit eignen sie sich auch besonders für das Klotz-Kaltverweil-Verfahren.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, gelbe bis blaustichig rote Färbungen und Drucke mit guten Echtheitseigenschaften, wie guten Plissier-, Bügel- und Reibechtheiten und insbesondere einer guten Lichtechtheit und guten Naßechtheitseigenschaften, erhalten, von denen insbesondere die Chlorbadewasser- und Schweißechtheiten hervorgehoben werden können. Weiterhin sind die Verbindungen (1) zum Einsatz für Fondfärbungen geeignet, da sich die mit den Verbindungen (1) erhältlichen Färbungen alkalisch und/oder reduktiv ätzen lassen und somit gezielt entfärbt werden können. Ebenso eignen sich die Verbindungen (1) zum Einsatz für Fondfärbungen mit nachfolgender alkalischer Buntätze, beispielsweise unter Verwendung von Küpenfarbstoffen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.
Die im sichtbaren Bereich angegebenen Absorptionsmaxima (λₘₐₓ-Werte) wurden aus wäßriger Lösung der Alkalimetallsalze bestimmt.

### Beispiel 1

a) Man suspendiert in Gegenwart eines handelsüblichen Dispergiermittels 37,0 Teile Cyanurchlorid in 300 Teilen Wasser von 0°C, gibt 16,8 Teile Cyanamid hinzu und führt die Umsetzung zunächst bei einer Temperatur zwischen 0 und 5°C und unter Einhaltung eines pH-Wertes zwischen 8,0 und 8,5 mittels wäßriger 2n-Natronlauge während etwa einer Stunde und sodann bei einem pH-Wert zwischen 7,0 und 8,0 unter Erhöhung der Reaktionstemperatur auf 60°C durch. Das Ende der Umsetzung kann dünnschichtchromatographisch verfolgt werden. Sodann gibt man zu dem Reaktionsansatz 60,6 Teile 1-Amino-8-naphthol-3,6-disulfonsäure hinzu, erhöht die Temperatur auf 80 bis 85°C und führt die dritte Kondensationsreaktion bei einem pH-Wert zwischen 4 und 4,5 durch. Nach Abkühlen des Reaktionsansatzes auf 20 °C fällt die Verbindung 1-(2',4'-Di-cyanamido-1',3',5'-triazin-6'-yl)-amino-8-naphthol-3,6-disulfonsäure aus und kann durch Filtration isoliert werden. Vorteilhaft setzt man jedoch diese Verbindung für die nachfolgende Umsetzung in Form des nach der Synthese erhaltenen Reaktionsansatzes direkt ein.
b) Eine auf üblichem Wege hergestellte salzsaure wäßrige Suspension des Diazoniumsalzes aus 50,0 Teilen 4-(β-Sulfatoethylsulfonyl)-anilin gibt man langsam zu der a) erhaltenen Syntheselösung, wobei man während der Kupplungsreaktion einen pH-Wert zwischen 4,0 und 4,5 und einer Temperatur von anfangs 10°C einhält und schließlich die Kupplungsreaktion bei 25°C zu Ende führt. Danach wird die Reaktionslösung geklärt und die erfindungsgemäße Monoazoververbindung mittels Natriumchlorid ausgefällt und isoliert.

Man erhält die erfindungsgemäße Monoazoverbindung als Alkalimetallsalz (Natriumsalz). Sie besitzt, in Form der freien Säure, die Formel 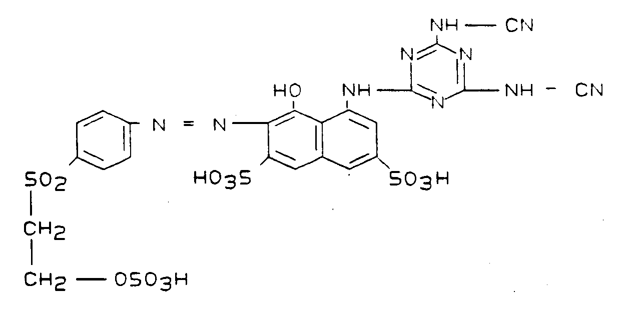
(λₘₐₓ = 518 nm).

Die erfindungsgemäße Monoazoverbindung zeigt sehr gute faserreaktive Farbstoffeigenschaften und liefert auf den in der Beschreibung genannten Materialien, insbesondere Cellulosefasermaterialien, nach den in der Technik üblichen Anwendungs- und Fixiermethoden für faserreaktive Farbstoffe leuchtend rote, farbstarke Färbungen mit guten Echtheitseigenschaften, von denen insbesondere die Naßlichtechtheit hervorgehoben werden kann. Die erfindungsgemäße Monoazoverbindung eignet sich weiterhin für die Herstellung von Fond-Färbungen, da sie nachträglich von der Faser weggeätzt werden kann.

### Beispiel 2

Zur Herstellung einer erfindungsgemäßen Monoazoverbindung verfährt man gemäß der im Beispiel 1 angegebenen Verfahrensweise, setzt jedoch anstelle des Diazoniumsalzes des 4-(β-Sulfatoethylsulfonyl)-anilins die auf üblichem Wege hergestellte wäßrige, salzsaure Suspension des Diazoniumsalzes aus 76 Teilen 6-(β-Sulfatoethylsulfonyl)-1-sulfo-2-naphthylamin ein.

Die in Form des elektrolythaltigen (natriumchloridhaltigen) Pulvers isolierte erfindungsgemäße Alkalimetall-Monoazoverbindung der Formel (in Form der freien Säuren geschrieben) 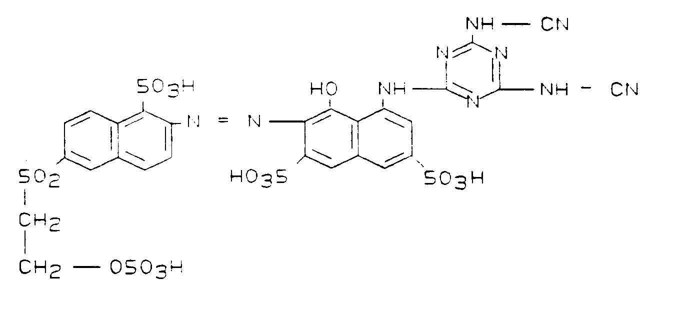
(λₘₐₓ = 537 nm).
besitzt sehr gute faserreaktive Farbstoffeigenschaften und liefert nach den in der Technik bekannten Anwendungsmethoden farbstarke, leuchtend rote Färbungen und Drucke mit guten Echtheitseigenschaften, von denen insbesondere die Chlorechtheit hervorgehoben werden kann.

### Beispiel 3

Zur Herstellung einer erfindungsgemäßen Monoazoverbindung verfährt man gemäß der Verfahrensweise des Beispieles 1, setzt jedoch anstelle von 1-Amino-8-naphthol-3,6-disulfonsäure als eine der Ausgangsverbindungen die gleiche Menge an 1-Amino-8-naphthol-4,6-disulfonsäure ein.

Die erfindungsgemäße Monoazoverbindung besitzt, in Form der freien Säure geschrieben, die Formel 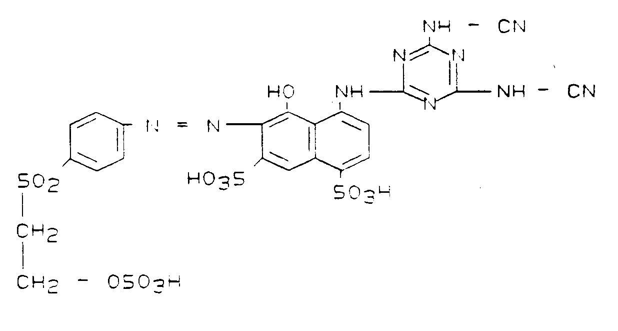
(λₘₐₓ = 500 nm),
die sehr gute faserreaktive Farbstoffeigenschaften aufweist und nach den für faserreaktive Farbstoffe üblichen Anwendungsmethoden insbesondere auf Cellulosematerialien farbstarke, echte, rote Färbungen und Drucke mit guten Echtheitseigenschaften liefert.

### Beispiel 4

Man suspendiert 184 Teile Cyanurchlorid in Gegenwart eines handelsüblichen Dispergiermittels in einem Gemisch aus 500 Teilen Eis und Wasser und setzt 84 Teile Cyanamid hinzu. Man führt die erste Kondensationsreaktion bei einem pH-Wert zwischen 7,5 und 8,0 durch, wobei das Ende der Umsetzung dünnschichtchromatographisch kontrolliert werden kann. Zur Durchführung der zweiten Kondensationsreaktion erhöht man die Temperatur allmählich bis auf 75°C und führt die Umsetzung bis zum Ende der Kondensationsreaktion bei dieser Temperatur durch. Sodann gibt man 205 Teile 2-Amino-8-naphthol-6-sulfonsäure hinzu, stellt den pH auf einen Wert zwischen 4 und 4,5 und führt die dritte Kondensationsreaktion innerhalb dieses pH-Bereiches bei 80 bis 85°C zu Ende, wobei auch hier die Umsetzung dünnschichtchromatographisch verfolgt werden kann.

Die nach Beendigung der Kondensationsreaktionen erhaltene Syntheselösung wird auf üblichem Wege geklärt und auf 15 bis 20°C abgekühlt. Man gibt eine auf üblichem Wege hergestellte salzsaure wäßrige Suspension des Diazoniumsalzes aus 235 Teilen 4-(β-Sulfatoethylsulfonyl)-anilin hinzu und führt die Kupplungsreaktion bei einem pH-Wert von 4,5 durch. Anschließend wird der Ansatz geklärt, beispielsweise mittels Kieselgur mit anschließender Filtration, und die erfindungsgemäße Monoazoverbindung mittels Natriumchlorid ausgefällt und isoliert; deren Isolierung kann aber auch durch Eindampfen der geklärten Syntheselösung oder durch Sprühtrocknen derselben erfolgen.

Man erhält die erfindungsgemäße Monoazoverbindung der Formel 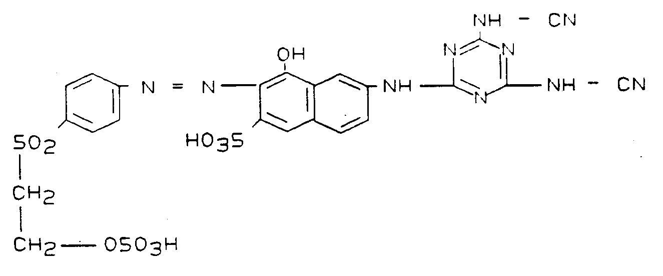
in Form des Alkalimetallsalzes (Natriumsalzes).
Sie besitzt ebenfalls faserreaktive Farbstoffeigenschaften und färbt die in der Beschreibung genannten Materialien, insbesondere Cellulosefasermaterialien, wie Baumwolle, nach den üblichen Anwendungsmethoden in farbstarken rötlich braunen, echten Tönen.

### Beispiel 5

Zur Herstellung einer erfindungsgemäßen Monoazoverbindung verfährt man gemäß der Verfahrensweise des Beispieles 4, setzt jedoch anstelle der 2-Amino-8-naphthol-6-sulfonsäure als eine der Ausgangsverbindungen die gleiche Menge an 3-Amino-8-napthol-6-sulfonsäure ein. Die erhaltene Monoazoverbindung besitzt ein Absorptionsmaximum bei 490 nm, zeigt sehr gute faserreaktive Farbstoffeigenschaften und liefert nach den für faserreaktive Farbstoffe übliche Anwendungsmethoden insbesondere auf Cellulosefasermaterialien farbstarke, echte Färbungen und Drucke in orangen Farbtönen.

### Beispiele 6 bis 19

In den nachfolgenden Tabellenbeispielen sind weitere erfindungsgemäße Monoazoverbindungen mit Hilfe der allgemeinen Formel (A) 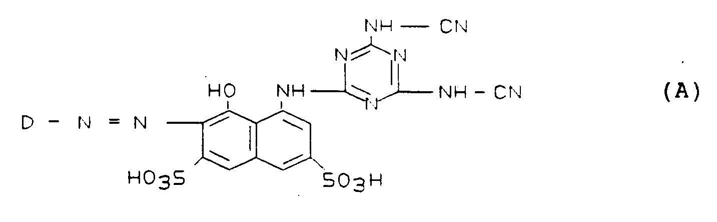
beschrieben. Sie lassen sich in erfindungsgemäßer Weise aus den aus dem jeweiligen Tabellenbeispiel in Verbindung mit Formel (A) ersichtlichen Ausgangskomponenten, beispielsweise analog den obigen Beispielen 1 bis 5, herstellen. Sie besitzen sehr gute faserreaktive Farbstoffeigenschaften und färben die in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

| Beispiel | Monoazoverbindung (A) mit Rest D | Farbton |
|---|---|---|
| 6 | 3-(β-Sulfatoethylsulfonyl)-phenyl | rot (510) |
| 7 | 2-Carboxy-5-(β-sulfatoethylsulfonyl)-phenyl | rot |
| 8 | 2-Ethoxy-5-(β-sulfatoethylsulfonyl)-phenyl | blaustichig rot |
| 9 | 2-Methoxy-5-(β-sulfatoethylsulfonyl)-phenyl | blaustichig rot |
| 10 | 4-Vinylsulfonyl-phenyl | rot |
| 11 | 2,5-Dimethoxy-4-(β-sulfatoethyl)-sulfonyl)-phenyl | violett |
| 12 | 5-Methyl-2-methoxy-4-(β-sulfatoethylsulfonyl)-phenyl | rotstichig violett |
| 13 | 2,5-Dimethyl-4-(β-sulfatoethylsulfonyl)-phenyl | rotstichig violett |
| 14 | 2-Sulfo-4-(β-sulfatoethylsulfonyl)-phenyl | rot |
| 15 | 4-[N-(3'-β-sulfatoethylsulfonyl)-phenyl]-amidocarbonyl-phenyl | rot |
| 16 | 2-Sulfo-5-(β-sulfatoethylsulfonyl)-phenyl | rot |
| 17 | 6-(β-Sulfatoethylethylsulfonyl)-naphth-2-yl | violett |
| 18 | 8-(β-Sulfatoethylsulfonyl)-6-sulfonaphth-2-yl | blaustichig rot |
| 19 | 5-(β-Sulfatoethylsulfonyl)-naphth-1-yl | blaustichig rot |

### Beispiele 20 bis 32

In den nachfolgenden Tabellenbeispielen sind weitere erfindungsgemäße Monoazoverbindungen mit Hilfe der allgemeinen Formel (B) 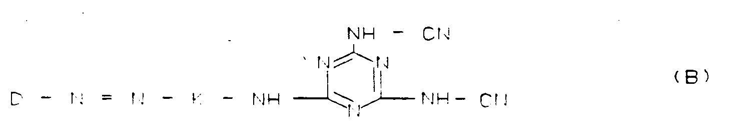
beschrieben. Sie lassen sich in erfindungsgemäßer Weise aus den aus dem jeweiligen Tabellenbeispiel in Verbindung mit Formel (B) ersichtlichen Ausgangskomponenten, beispielsweise analog einem der obigen Ausführungsbeispiele, herstellen. Sie besitzen sehr gute faserreaktive Farbstoffeigenschaften und färben in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

| Bsp. | Monoazoverbindung der Formel (B) mit | | Farbton |
|---|---|---|---|
| | Rest D | Komponente H-K-NH₂ | |
| 20 | 4-Vinylsulfonyl-phenyl | 1-Amino-4,6-disulfo-8-naphthol | rot |
| 21 | 3-(β-Sulfatoethylsulfonyl)-phenyl | dito | rot |
| 22 | 1-Sulfo-6-(β-sulfatoethylsulfonyl)-naphth-2-yl | dito | rotstichig violett |
| 23 | 2-Methoxy-5-(β-sulfatoethylsulfonyl)-phenyl | dito | blaustichig rot |
| 24 | 2-Sulfo-5-(β-sulfatoethylsulfonyl)-phenyl | dito | rot |
| 25 | 3-(β-Sulfatoethylsulfonyl)-phenyl | 2-Amino-6-sulfo-8-naphthol | orange |
| 26 | 2-Methoxy-5-(β-sulfatoethylsulfonyl)-phenyl | dito | rotstichig braun |
| 27 | 6-Sulfo-8-(β-sulfatoethylsulfonyl)-naphth-2-yl | dito | orange |
| 28 | 1-Sulfo-6-(β-sulfatoethylsulfonyl)-naphth-2-yl | dito | orange (500) |
| 29 | 4-(β-Thiosulfatoethylsulfonyl)-phenyl | 3-Amino-6-sulfo-8-naphthol | orange (490) |
| 30 | 3-(β-Sulfatoethylsulfonyl)-phenyl | dito | orange (473) |
| 31 | 6-Sulfo-8-(β-Sulfatoethylsulfonyl)-naphth-2-yl | dito | orange |
| 32 | 2-Methoxy-5-(β-Sulfatoethylsulfonyl)-phenyl | dito | rotstichig orange |

## Patentansprüche

1. Monoazoverbindung entsprechend der allgemeinen Formel (1) 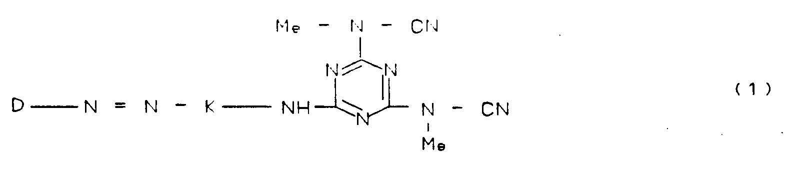 in welcher bedeuten:
Me ist Wasserstoff oder ein Alkalimetall;
K ist ein Rest der allgemeinen Formel (2) 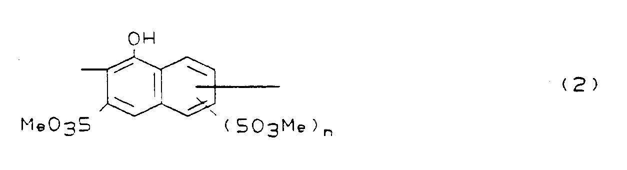
in welcher
Me eine der oben angegebenen Bedeutungen hat und
n die Zahl Null oder 1 bedeutet (wobei im Falle von n gleich Null diese Gruppe Wasserstoff bedeutet);
D ist eine Gruppe der allgemeinen Formel (3a), (3b) oder (3c) 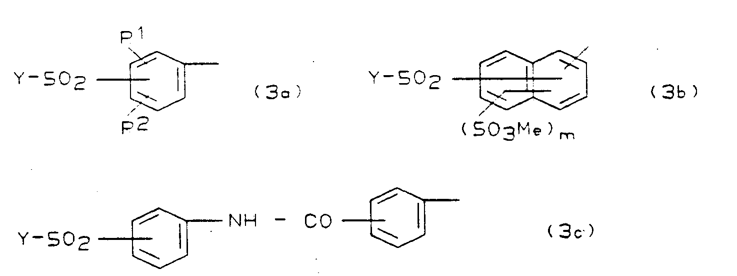
in welchen
Me eine der oben genannten Bedeutungen besitzt,
R¹ Wasserstoff, Alkyl von 1 bis 4 C-Atomen, das durch Sulfo, Carboxy oder Sulfato substituiert sein kann, Alkoxy von 1 bis 4 C-Atomen, das durch Sulfo, Carboxy oder Sulfato substituiert sein kann, Chlor, Brom, Hydroxy, Cyano, Carboxy oder Sulfo ist,
R² Wasserstoff, Alkyl von 1 bis 4 C-Atomen oder Alkoxy von 1 bis 4 C-Atomen ist,
Y Vinyl ist oder Ethyl ist, das in β-Stellung einen Substituenten enthält, der durch Alkali unter Bildung der Vinylgruppe eliminierbar ist, und
m die Zahl Null, 1 oder 2 ist (wobei im Falle von m gleich Null diese Gruppe Wasserstoff bedeutet).

2. Monoazoverbindung nach Anspruch 1, dadurch gekennzeichnet, daß n gleich 1 ist.

3. Monoazoverbindung nach Anspruch 1 oder 2, dadurch gekennzeichnet, das der Rest -K-NH- ein Rest der allgemeinen Formel (4a) 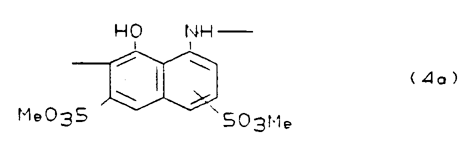 mit Me der in Anspruch 1 genannten Bedeutung ist.

4. Monoazoverbindung nach Anspruch 3, dadurch gekennzeichnet, daß die eine Gruppe -SO₃Me in Formel (4a) in meta-Stellung zur Gruppe -NH- gebunden ist.

5. Monoazoverbindung nach mindestens einem der Ansprüche 1 bis 4, dadurch gekennzeichnet, daß D 4-(β-Sulfatoethylsulfonyl)-phenyl ist.

6. Monoazoverbindung nach mindestens einem der Ansprüche 1 bis 4, dadurch gekennzeichnet, daß D 1- Sulfo-6-(β-sulfatoethylsulfonyl)-naphth-2-yl ist.

7. Monoazoverbindung nach mindestens einem der Ansprüche 1 bis 6, dadurch gekennzeichnet, daß Y Vinyl, β-Thiosulfatoethyl, β-Chlorethylsulfonyl oder bevorzugt β-Sulfatoethyl ist.

8. Verfahren zur Herstellung einer Verbindung der allgemeinen Formel (1) von Anspruch 1, dadurch gekennzeichnet, daß man eine Verbindung der allgemeinen Formel (5) 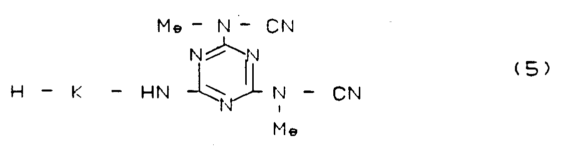 in welcher K und Me die in Anspruch 1 genannten Bedeutungen haben, mit dem Diazoniumsalz eines aromatischen Amins der allgemeinen Formel D-NH₂ mit D der in Anspruch 1 angegebenen Bedeutung kuppelt.

9. Verwendung einer Monoazoverbindung der Formel (1) von mindestens einem der Ansprüche 1 bis 8 zum Färben und Bedrucken von hydroxy-und/oder carbonamidgruppenhaltigem Material, insbesondere Fasermaterial.

10. Verfahren zum Färben und Bedrucken von hydroxy- und/oder carbonamidgruppenhaltigem Material, vorzugsweise Fasermaterial, bei weichem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Monoazoverbindung der Formel (1) von mindestens einem der Ansprüche 1 bis 8 verwendet.

## Claims

1. A monoazo compound conforming to the formula (1) 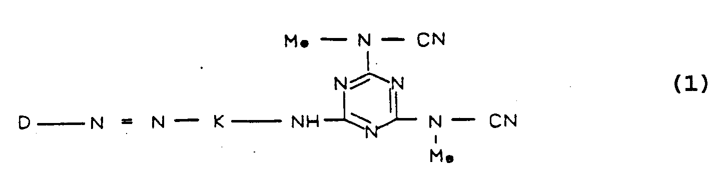 where
Me is hydrogen or an alkali metal;
K is a radical of the formula (2) 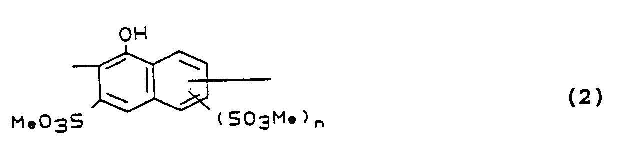 where
Me has one of the abovementioned meanings and
n is zero or 1 (if zero, this group being hydrogen);
D is a group of the formula (3a), (3b) or (3c) 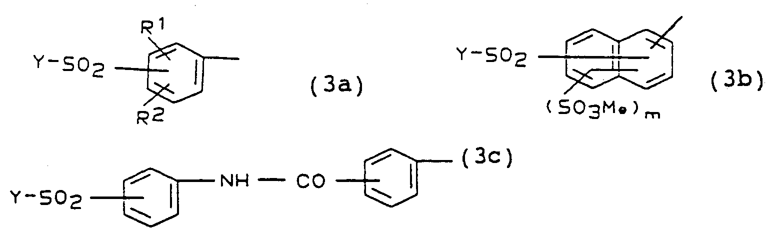 where
Me has one of the abovementioned meanings,
R¹ is hydrogen, alkyl of from 1 to 4 carbon atoms, which may be sulfo-, carboxyl- or sulfato-substituted, alkoxy of from 1 to 4 carbon atoms, which may be sulfo-, carboxyl- or sulfato-substituted, chlorine, bromine, hydroxyl, cyano, carboxyl or sulfo,
R² is hydrogen, alkyl of from 1 to 4 carbon atoms or alkoxy of from 1 to 4 carbon atoms,
Y is vinyl or ethyl which contains in the β-position a substituent which is eliminable by alkali to form a vinyl group, and
m is zero, 1 or 2 (if zero, this group being hydrogen).

2. A monoazo compound as claimed in claim 1, wherein n is 1.

3. A monoazo compound as claimed in claim 1 or 2, wherein the radical -K-NH- is a radical of the formula (4a) 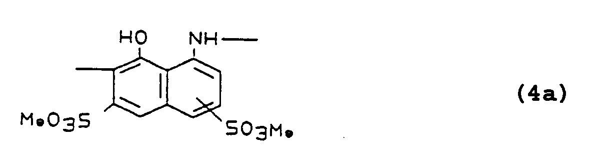 where Me is as defined in claim 1.

4. A monoazo compound as claimed in claim 3, wherein in the formula (4a) the -SO₃Me group is meta to the -NH- group.

5. A monoazo compound as claimed in at least one of claims 1 to 4, wherein D is 4-(β-sulfatoethylsulfonyl)phenyl.

6. A monoazo compound as claimed in at least one of claims 1 to 4, wherein D is 1-sulfo-6-(β-sulfatoethylsulfonyl) naphth-2-yl.

7. A monoazo compound as claimed in at least one of claims 1 to 6, wherein Y is vinyl, β-thiosulfatoethyl, β-chloroethylsulfonyl or preferably β-sulfatoethyl.

8. A process for preparing a compound of the formula (1) of claim 1, which comprises coupling a compound of the formula (5) 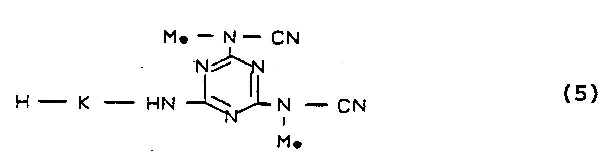 where K and Me are each as defined in claim 1, with the diazonium salt of an aromatic amine of the formula D-NH₂, where D is as defined in claim 1.

9. The use of a monoazo compound of the formula (1) of at least one of claims 1 to 8, for dyeing and printing hydroxyl- and/or carboxamido-containing material, in particular fiber material.

10. A process for dyeing and printing hydroxyl- and/or carboxamido-containing material, preferably fiber material, in which a dye is applied to or introduced into the material and fixed thereon or therein by means of heat or with the aid of an alkaline agent or by means of heat and with the aid of an alkaline agent, which comprises using as the dye a monoazo compound of the formula (1) of at least one of claims 1 to 8.

## Revendications

1. Composé monoazoïque correspondant à la formule générale (1) 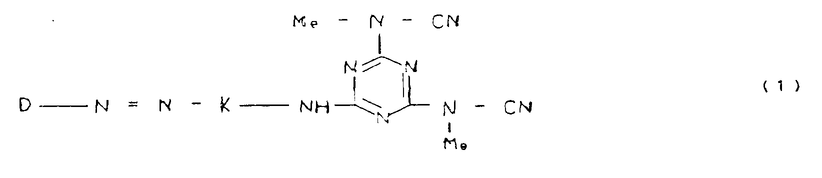 dans laquelle on a les significations suivantes :
Me est l'hydrogène ou un métal alcalin ;
K est un radical de formule générale (2) 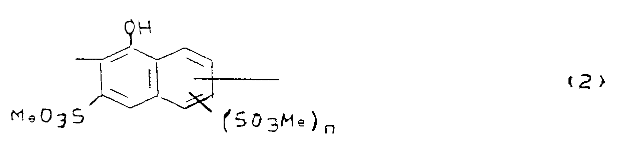
dans laquelle
Me a une des significations précitées et
n est le nombre 0 ou 1, (ce groupe représentant l'hydrogéne dans le cas où n est 0);
D est un groupe de formule générale (3a), (3b) ou (3c) 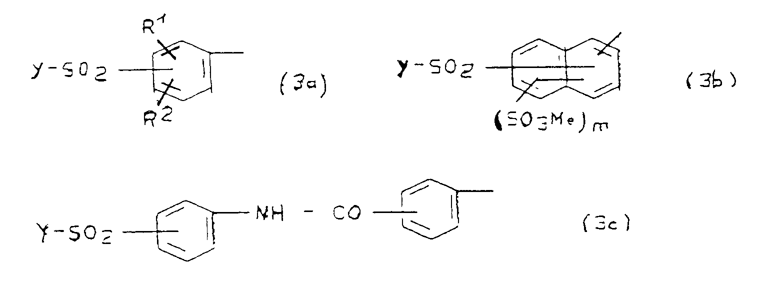
dans lesquelles
Me a une des significations précitées,
R¹ représente l'hydrogène, un alkyle ayant de 1 à 4 atomes de C, qui peut être substitué par le sulfo, le carboxy ou le sulfato, un alcoxy ayant de 1 à 4 atomes de C, qui peut être substitué par le sulfo le carboxy ou le sulfato ou il représente le chlore, le brome, l'hydroxy, le cyano, le carboxy ou le sulfo,
R² représente l'hydrogène, un alkyle ayant de 1 à 4 atomes de C, ou un alcoxy ayant de 1 à 4 atomes de C,
Y est le vinyle ou l'éthyle, qui comporte en position β un substituant, qui peut être éliminé par un alcali en formant le groupe vinyle, et
m ést le nombre 0, 1 ou 2 (ce groupe représentant l'hydrogène dans le cas où m est 0).

2. Composé monoazoïque selon la revendication 1, caractérisé en ce que n est égal à 1.

3. Composé monoazoïque selon la revendication 1 ou 2, caractérisé en ce que le radical -K-NH- est un radical de formule générale (4a) 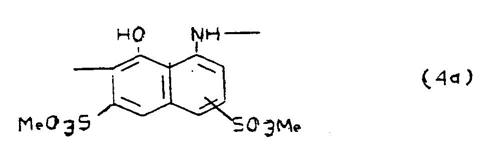 Me ayant la signification donnée dans la revendication 1.

4. Composé monoazoïque selon la revendication 3, caractérisé en ce que l'un des groupes -SO₃Me dans la formule (4a) est lié en position méta par rapport au groupe -NH-.

5. Composé monoazoïque selon au moins une des revendications 1 à 4, caractérisé en ce que D est le 4-(β-sulfatoéthylsulfonyl)-phényle.

6. Composé monoazoïque selon au moins une des revendications 1 à 4, caractérisé en ce que D est le 1-sulfo-6-(β-sulfatoéthylsulfonyl)-napht-2-yle.

7. Composé monoazoïque selon au moins une des revendications 1 à 6, caractérisé en ce que Y est le vinyle, le β-thiosulfatoéthyle, le β-chloroéthylsulfonyle ou de préférence le β-sulfatoéthyle.

8. Procédé pour préparer un composé de formule générale (1) de la revendication 1, caractérisé en ce que l'on fait copuler un composé de formule générale (5) 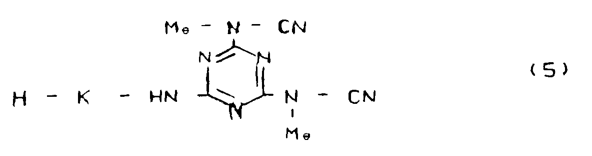 dans laquelle K et Me ont les significations données dans la revendication 1, avec le sel de diazonium d'une amine aromatique de formule générale D-NH₂, D ayant la signification donnée a la revendication 1.

9. Utilisation d'un composé monoazoïque de formule (1) d'au moins une des revendications 1 à 8, pour colorer et imprimer une matière contenant des groupes hydroxy et/ou carbonamide, en particulier une matière fibreuse.

10. Procédé pour colorer et imprimer une matière contenant des groupes hydroxy et/ou carbonamide, de préférence une matière fibreuse, dans lequel on applique un colorant sur la matière ou dans la matière et on fixe le colorant sur ou dans la matière au moyen de la chaleur ou au moyen d'un agent à action alcaline ou au moyen de la chaleur et à l'aide d'un agent à action alcaline, caractérisé en ce que l'on utilise comme colorant un composé monoazoïque de formule (1) d'au moins une des revendications 1 à 8.
